(19) Europäisches Patentamt
European Patent Office
Office européen des brevets

(11) **EP 1 970 405 A1**

(12) **EUROPEAN PATENT APPLICATION**
published in accordance with Art. 158(3) EPC

(43) Date of publication:
**17.09.2008 Bulletin 2008/38**

(51) Int Cl.:
**C08L 9/00** (2006.01)

(21) Application number: **06843166.7**

(22) Date of filing: **25.12.2006**

(86) International application number:
**PCT/JP2006/325762**

(87) International publication number:
**WO 2007/077787 (12.07.2007 Gazette 2007/28)**

(84) Designated Contracting States:
**DE FR IT**

(30) Priority: **06.01.2006 JP 2006001703**

(71) Applicants:
• **SUMITOMO RUBBER INDUSTRIES, LTD.**
**Kobe-shi,**
**Hyogo 651-0072 (JP)**
• **Ube Industries, Ltd.**
**Ube-shi,**
**Yamaguchi-ken 755-8633 (JP)**

(72) Inventors:
• **ISHIDA, Hirokazu**
**Kobe-shi, Hyogo 651-0072 (JP)**
• **OTSUKI, Hirotoshi**
**Kobe-shi, Hyogo 651-0072 (JP)**
• **WADA, Takashi**
**Ichihara-shi, Chiba 290-0045 (JP)**

(74) Representative: **Manitz, Gerhart**
**Manitz, Finsterwald & Partner GbR**
**Martin-Greif-Strasse 1**
**80336 München (DE)**

(54) **RUBBER COMPOSITION FOR SIDEWALL**

(57) A rubber composition for a sidewall, in which balance between tip cut resistance and heat build-up property of a sidewall is enhanced, is provided. Namely, the present invention relates to a rubber composition for a sidewall, comprising a rubber component comprising 10 to 60 % by weight of a butadiene rubber, wherein syndiotactic-1,2-polybutadiene having an average primary particle diameter of not more than 100 nm is dispersed in the butadiene rubber.

EP 1 970 405 A1

**Description**

TECHNICAL FIELD

The present invention relates to a rubber composition for a sidewall.

BACKGROUND ART

Among tires, particularly as for a tire for heavy load for an autotruck, a bus, etc., a rubber composition mainly comprising a natural rubber and a butadiene rubber has been used for a sidewall from the viewpoint of bending resistance and strength.

Since a sidewall of a tire for heavy load has a tendency of easily generating heat (low heat build-up is easily deteriorated), in order to suppress the heat generation, for instance, a method of enlarging a particle diameter of carbon black, a method of decreasing an amount of carbon black or the like method has been employed. However, in any of the cases, there have been problems that strength was lowered and resistance against external damage became small.

JP-A-2005-75951 discloses a rubber composition for a tire comprising a butadiene rubber in which syndiotactic-1,2-polybutadiene is dispersed, however, since syndiotactic-1,2-polybutadiene in the butadiene rubber is large in an average primary particle diameter and is not sufficiently dispersed, adequate performance was not obtained.

DISCLOSURE OF INVENTION

An object of the present invention is to provide a rubber composition for a sidewall, in which balance between tip cut resistance and low heat build-up of a sidewall is improved.

The present invention relates to a rubber composition for a sidewall, comprising a rubber component comprising 10 to 60 % by weight of a butadiene rubber, wherein syndiotactic-1,2-polybutadiene having an average primary particle diameter of not more than 100 nm is dispersed in the butadiene rubber.

BEST MODE FOR CARRYING OUT THE INVENTION

The rubber composition for a sidewall of the present invention comprises a rubber component, and the rubber component contains a butadiene rubber (SPB-containing BR) in which syndiotactic-1,2-polybutadiene is dispersed.

In the SPB-containing BR, syndiotactic-1,2-polybutadiene (SPB) is sufficiently finely dispersed in BR that is to be a matrix, therefore, an average primary particle diameter of SPB in the BR is extremely small.

In the SPB-containing BR, the average primary particle diameter of the SPB in the BR is not more than 100 nm, preferably not more than 80 nm, more preferably not more than 50 nm. When the average primary particle diameter of the SPB is more than 100 nm, sufficient improvement effects of physical properties due to containing the SPB in the BR cannot be obtained. The average primary particle diameter of the SPB contained in the BR is measured as an average value of an absolute maximum length obtained by an image analysis of pictures of a transmission electron microscope.

A content of SPB in the SPB-containing BR is preferably not less than 7 % by weight, more preferably not less than 10 % by weight. When the content is less than 7 % by weight, there is a tendency that sufficient tip cut resistance cannot be obtained. The content of the SPB in the SPB-containing BR is preferably not more than 20 % by weight, more preferably not more than 14 % by weight. When the content is more than 20 % by weight, it becomes difficult to knead a rubber, and there is a tendency that sufficient tip cut resistance cannot be obtained. The content of SPB in the SPB-containing BR is indicated by an amount of an insoluble matter in a boiling n-hexane.

The SPB in the SPB-containing BR is preferably crystal from the viewpoint of imparting reinforcing property within a range from a normal temperature to a temperature at using a tire.

Preparation processes of SPB-containing BR satisfying the above conditions are not particularly limited and the SPB-containing BR can be prepared by, for instance, the preparation process disclosed in JP-A-2005-247899.

In the rubber composition for a sidewall, a content of SPB-containing BR in the rubber component (including BR containing no SPB when used together) is not less than 10 % by weight, preferably not less than 25 % by weight. When the content is less than 10 % by weight, it becomes difficult to obtain sufficient bending fatigue resistance. The content of SPB-containing BR in the rubber component is not more than 60 % by weight, preferably not more than 40 % by weight. When the content is more than 60 % by weight, sufficient tip cut resistance can not be obtained.

It is preferable that the rubber composition for a sidewall further comprises a natural rubber (NR) as a rubber component.

In the rubber composition for a sidewall, a content of NR in the rubber component is preferably not less than 30 % by weight, more preferably not less than 50 % by weight. When the content is less than 30 % by weight, there is a tendency that sufficient tip cut resistance cannot be obtained.

In addition to the above-described diene rubber containing syndiotactic-1,2-polybutadiene, and NR, general butadiene rubbers without containing syndiotactic-1,2-polybutadiene and styrene-butadiene rubbers may be compounded together as the rubber component.

It is preferable that the rubber composition for a side wall contains carbon black as a reinforcing filler together with the above described rubber components.

A nitrogen adsorbing-specific surface area ($N_2SA$) of carbon black is preferably 40 to 80 $m^2/g$. When $N_2SA$ is less than 40 $m^2/g$, there is a tendency that sufficient tip cut resistance cannot be obtained. When $N_2SA$ is more than 80 $m^2/g$, there is a tendency that low heat build-up is impaired.

By using the rubber composition for a sidewall of the present invention, hardness can be maintained while decreasing an amount of carbon black, and it is possible to keep or improve bending fatigue resistance, low heat build-up and breaking strength required for a rubber composition for a sidewall even in a small amount of carbon black.

A content of carbon black may be smaller than that of a conventional rubber composition for a sidewall and is 20 to 45 parts by weight on the basis of 100 parts by weight of a rubber component. When the content is less than 20 parts by weight, there is a tendency that sufficient tip cut resistance cannot be obtained. When the content is more than 45 parts by weight, there is a tendency that low heat build-up is impaired.

It is preferable that an adhesive resin is further compounded in the rubber composition for a sidewall.

Examples of the adhesive resin are concretely aliphatic ($C_5$) petroleum resins, aromatic ($C_9$) petroleum resins, alicyclic petroleum resins, terpene resins and rosin resins, and it is particularly preferable to use aliphatic ($C_5$) petroleum resins.

A softening point of the adhesive resin is preferably 90°C to 130°C. When the softening point is less than 90°C, there is a tendency that low heat build-up is impaired. When the softening point is more than 130°C, it becomes difficult to disperse during rubber kneading, and there is a tendency that tip cut resistance is lowered.

It is preferable that an amount of the adhesive resin is 1 to 5 parts by weight on the basis of 100 parts by weight of a rubber component. When the amount is less than 1 part by weight, there is a tendency that sufficient adhesion cannot be obtained. When the amount is more than 5 parts by weight, there is a tendency that low heat built-up property is impaired.

In the rubber composition for a sidewall, in addition to the above-described components, agents generally used in the rubber industries such as a reinforcing filler such as silica, stearic acid, an antioxidant, wax, zinc oxide, a vulcanizing agent and a vulcanization accelerator can be compounded.

The rubber composition for a sidewall can be used for preparation of a tire by a general process. Namely, an unvulcanized rubber composition obtained by kneading the rubber component and a reinforcing filler is extrusion-processed while being adjusted to a shape of a sidewall, and further, the obtained extruded product is laminated with other tire parts to form an unvulcanized tire on a tire molding machine. Further, this unvulcanized tire is vulcanized in a vulcanizer to prepare a tire.

Examples of the above tire are, for instance, a tire for an automobile, and a tire for heavy load of an autotruck, a bus etc, and the tire is preferably used particularly for a tire for heavy load.

EXAMPLES

The present invention is specifically explained in detail based on Examples, but the present invention is not limited only thereto.

Various compounding agents used in the present invention are shown in the following.

NR:TSR20

BR150B: available from Ube Industries, Ltd.

VCR412: available from Ube Industries, Ltd. (BR having dispersed syndiotactic-1,2-polybutadiene crystal, content of syndiotactic-1,2-polybutadiene: 12 % by weight, average primary particle diameter of syndiotactic-1,2-polybutadiene crystal: 250 nm)

VCR prototype: Prototype available from Ube Industries, Ltd. (BR having dispersed syndiotactic-1,2-polybutadiene crystal, content of syndiotactic-1,2-polybutadiene: 12 % by weight, average primary particle diameter of syndiotactic-1,2-polybutadiene crystal: 43 nm)

CB N330: Carbon black N330 ($N_2SA$: 80 $m^2/g$) available from Mitsubishi Chemical Corporation

Zinc oxide: available from TOHO ZINC CO., LTD.

Stearic acid: available from NOF Corporation

Antioxidant: 6C available from Seiko Chemical Co., Ltd.

Wax: OZOACE wax available from NIPPON SEIRO Co., Ltd.

Adhesive resin: Escoletz1102 (C5 resin, softening point: 97°C to 103°C) available from Exxon Chemical Company

Sulfur powder: available from Tsurumi Chemical Industry Co., Ltd.
Vulcanization accelerator NS: TBBS available from Ouchi Shinko Chemical Industrial CO., LTD

Average primary particle diameters of VCR412 and VCR prototype were measured as average values of absolute maximum lengths obtained by an image analysis of pictures of a transmission electron microscope.
A nitrogen adsorbing-specific surface area ($N_2SA$) of CB N330 was measured according to a method of obtaining a specific surface area by a nitrogen adsorption method of JIS K 6217-2.

(Process for preparing VCR prototype)

A 2L stainless steel aging vessel equipped with a stirrer and maintained at 20°C was charged with 12.5L per hour of a mixture (water content: 2.09 mmol/L) (containing 20 mg/L of carbon disulfide) comprising 32 % by weight of 1,3-butadiene and 68 % by weight of C4 distillate containing cis-2-butene as the main component, which was dissolved in a specific amount of water content, while supplying diethylaluminum chloride (10 % by weight in n-hexane, 3.13 mmol/L), to adjust a molar ratio of diethylaluminum chloride/water in the solution in this reaction vessel to be 1.5. The obtained aged solution was supplied in a 5L stainless steel cis polymerization vessel equipped with a stirrer and maintained at 40°C. To this cis polymerization vessel were supplied cobalt octoate (0.0117 mmol/L of cobalt octoate, n-hexane solution) and 1,2-butadiene (8.2 mmol/L of 1,2-butadiene, 1.535 mol/L in n-hexane solution) as a molecular weight adjuster. The obtained cis polymerization solution was supplied to a 5L stainless steel 1,2 polymerization vessel equipped with a ribbon-shaped stirrer and continuously polymerized at 35°C for 10 hours. To this 1,2 polymerization vessel was continuously supplied triethylaluminum (10 % by weight in n-hexane solution, 4.09 mmol/L). The obtained polymerization solution was supplied to a mixing vessel equipped with a stirrer, thereto was added 2,6-di-t-butyl-p-crezol in an amount of 1 part by weight on the basis of 100 parts by weight of a rubber, and a small amount of methanol was further added. Then, after terminating the polymerization, unreacted 1,3-butadiene and C4 distillate were distilled to be removed, and 8.3 kg of VCR prototype was obtained by vacuum drying at normal temperature.

EXAMPLS 1 to 5 and COMPARATIVE EXAMPLES 1 to 6

(Process for preparing a test tire)

The above compounding agents except for sulfur and a vulcanization accelerator were kneaded by a banbury mixer under the conditions of a kneading temperature of 150°C and a kneading time of 4 minutes according to the compounding contents in Table 1.
Then, sulfur and a vulcanization accelerator were added, and the mixture was kneaded by using an open roll under the conditions of a kneading temperature of 40°C to 60°C and a kneading time of 4 minutes. The kneaded product was extrusion-molded to prepare a rubber sheet by using an extruder.
The obtained rubber sheet was molded into a shape of a sidewall and laminated with other tire parts, and vulcanized for 45 minutes at 150°C, thereby, each test tire (tire size 11R22.5) was prepared and used for the following measuring tests.

<Viscoelasticity test>

By using a test piece (width of 4 mm, thickness of 1.8 to 2.2 mm, and length of 30 mm) cut out from the test tire, loss tangent tan $\delta$ of each composition at 2 % strain was measured by a viscosity spectrometer VES (manufactured by Iwamoto Seisakusyo K.K.) under the conditions of a temperature of 70°C, an initial strain of 10 % and a frequency of 10 Hz. Then, a loss tangent is expressed as an index by the following calculation equation to evaluate heat build-up property. The higher the index is, the more favorable heat build-up property is.

$$\text{(Heat build-up property index)} =$$

$$\text{(tan } \delta \text{ of Comparative Example 1)/(each tan } \delta\text{)} \times 100$$

<Tip cut resistance>

Test pieces cut out from the test tire were respectively subjected to aerothermal aging in a gear oven tester at 80°C for 10 days, thereafter, a tensile test according to JIS K6251 was carried out, and a strength at break (TB) and an elongation at break (EB) of the test pieces were measured. Then, a product of the obtained strength at break by elongation at break (TB x EB) was calculated, and the product was respectively expressed as an index to evaluate tip cut resistance. The larger the index is, the more preferable the tip cut resistance is.

$$\text{(Tip cut resistance index)} =$$

$$\text{(each TB} \times \text{EB)/(TB} \times \text{EB of Comparative Example 1)} \times 100$$

<Hardness (DURO A)>

A hardness was measured at a point of the maximum width of a tire sidewall by JIS K6253 durometer test (a temperature of 23°C). It is preferable when the hardness is $50\pm2$.

<Bending crack growth resistance>

A cut of 5 mm-width and 2 mm-depth was applied on a sidewall part of a test tire at a point of the maximum strain, and the tire was run 15,000 km on a drum at a tire inner pressure of 850 kPa, a load of 37.5 kN and a speed of 40 km/h. A case where the cut did not grow is regarded as acceptance (O).

Results of the above measurements are shown in Tables 1 and 2.

TABLE 1

|  | Com. Ex. | | | | | |
|---|---|---|---|---|---|---|
|  | 1 | 2 | 3 | 4 | 5 | 6 |
| Amounts (part by weight) | | | | | | |
| NR | 60 | 60 | 60 | 60 | 60 | 91 |
| BR150B | 40 | 40 | 20 | - | 35 | - |
| VCR412 | - | - | 20 | 40 | - | - |
| VCR prototype | - | - | - | - | 5 | 9 |
| CB N330 | 50 | 40 | 35 | 30 | 45 | 40 |
| Zinc oxide | 3 | 3 | 3 | 3 | 3 | 3 |
| Stearic acid | 2 | 2 | 2 | 2 | 2 | 2 |
| Antioxidant | 4 | 4 | 4 | 4 | 4 | 4 |
| Wax | 1.5 | 1.5 | 1.5 | 1.5 | 1.5 | 1.5 |
| Adhesive resin | 3 | 3 | 3 | 3 | 3 | 3 |
| Sulfur | 1.5 | 1.5 | 1.5 | 1.5 | 1.5 | 1.5 |
| Vulcanization accelerator NS | 0.8 | 0.8 | 0.8 | 0.8 | 0.8 | 0.8 |
| Evaluation results | | | | | | |
| Index of heat build-up property | 100 | 106 | 110 | 118 | 103 | 120 |
| Index of tip cut resistance | 100 | 92 | 95 | 93 | 95 | 125 |
| Hardness (DURO A) | 50 | 45 | 45 | 47 | 48 | 48 |
| Bending crack growth resistance | O | O | O | O | O | ✕ |

TABLE 2

|  | Ex. | | | | |
|---|---|---|---|---|---|
|  | 1 | 2 | 3 | 4 | 5 |
| Amounts (part by weight) | | | | | |
| NR | 60 | 60 | 60 | 60 | 50 |
| BR150B | 30 | 20 | 10 | 0 | - |
| VCR412 | 0 | 0 | 0 | 0 | - |

(continued)

| Amounts (part by weight) | | | | | |
|---|---|---|---|---|---|
| VCR prototype | 10 | 20 | 30 | 40 | 50 |
| CB N330 | 40 | 35 | 30 | 25 | 20 |
| Zinc oxide | 3 | 3 | 3 | 3 | 3 |
| Stearic acid | 2 | 2 | 2 | 2 | 2 |
| Antioxidant | 4 | 4 | 4 | 4 | 4 |
| Wax | 1.5 | 1.5 | 1.5 | 1.5 | 1.5 |
| Adhesive resin | 3 | 3 | 3 | 3 | 3 |
| Sulfur | 1.5 | 1.5 | 1.5 | 1.5 | 1.5 |
| Vulcanization accelerator NS | 0.8 | 0.8 | 0.8 | 0.8 | 0.8 |
| Evaluation results | | | | | |
| Index of heat build-up property | 115 | 122 | 131 | 137 | 129 |
| Index of tip cut resistance | 100 | 106 | 102 | 100 | 97 |
| Hardness (DURO A) | 50 | 49 | 49 | 50 | 49 |
| Bending crack growth resistance | O | O | O | O | O |

INDUSTRIAL APPLICABILITY

According to the present invention, balance between tip cut resistance and heat build-up property of a sidewall can be improved by compounding a specific amount of a butadiene rubber containing syndiotactic-1,2-polybutadiene having a small average primary particle diameter in the rubber composition for a sidewall.

**Claims**

1.  A rubber composition for a sidewall, comprising a rubber component comprising 10 to 60 % by weight of a butadiene rubber, wherein syndiotactic-1,2-polybutadiene having an average primary particle diameter of not more than 100 nm is dispersed in said butadiene rubber.

2.  A tire having a sidewall, which comprises the rubber composition for a sidewall of Claim 1.

## INTERNATIONAL SEARCH REPORT

| | International application No. |
|---|---|
| | PCT/JP2006/325762 |

A. CLASSIFICATION OF SUBJECT MATTER
*C08L9/00*(2006.01)i

According to International Patent Classification (IPC) or to both national classification and IPC

B. FIELDS SEARCHED

Minimum documentation searched (classification system followed by classification symbols)
C08L7/00-23/00

Documentation searched other than minimum documentation to the extent that such documents are included in the fields searched
Jitsuyo Shinan Koho          1922-1996     Jitsuyo Shinan Toroku Koho     1996-2007
Kokai Jitsuyo Shinan Koho    1971-2007     Toroku Jitsuyo Shinan Koho     1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-247899 A (Ube Industries, Ltd.), 15 September, 2005 (15.09.05), Claims; Par. No. [0027] (Family: none) | 1,2 |
| A | JP 2005-075951 A (Sumitomo Rubber Industries, Ltd.), 24 March, 2005 (24.03.05), Claims (Family: none) | 1,2 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 January, 2007 (24.01.07) | 06 February, 2007 (06.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005075951 A

- JP 2005247899 A